(19) Europäisches Patentamt / European Patent Office / Office européen des brevets

(11) **EP 4 025 471 B1**

(12) **FASCICULE DE BREVET EUROPEEN**

(45) Date de publication et mention de la délivrance du brevet:
**09.08.2023   Bulletin 2023/32**

(21) Numéro de dépôt: **20757907.9**

(22) Date de dépôt: **20.08.2020**

(51) Classification Internationale des Brevets (IPC):
**B60W 30/16** *(2020.01)*        **B60W 50/00** *(2006.01)*

(52) Classification Coopérative des Brevets (CPC):
**B60W 30/16;** B60K 2310/26; B60W 2050/0062;
B60W 2520/10; B60W 2554/4042; B60W 2554/802;
B60W 2754/30

(86) Numéro de dépôt international:
**PCT/EP2020/073397**

(87) Numéro de publication internationale:
**WO 2021/043589 (11.03.2021 Gazette 2021/10)**

(54) **PROCÉDÉ DE COMMANDE D'UN SYSTÈME DE RÉGULATION D'UNE DISTANCE INTER-VÉHICULES**

VERFAHREN ZUR STEUERUNG EINES ABSTANDSREGELUNGSSYSTEMS ZWISCHEN FAHRZEUGEN

METHOD FOR CONTROLLING AN INTER-VEHICLE DISTANCE REGULATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.09.2019   FR 1909762**

(43) Date de publication de la demande:
**13.07.2022   Bulletin 2022/28**

(73) Titulaires:
• **Renault S.A.S.**
  **92100 Boulogne-Billancourt (FR)**
• **NISSAN MOTOR Co., Ltd.**
  **Yokohama-shi, Kanagawa 221-0023 (JP)**

(72) Inventeurs:
• **CAYOL, Olivier**
  **78000 Versailles (FR)**
• **DEBERNARD, Eric**
  **78960 VOISINS-LE-BRETONNEUX (FR)**
• **KRUMBIEGEL, Klaus**
  **09126 Chemnitz (DE)**
• **LAVABRE, Marc**
  **92420 VAUCRESSON (FR)**
• **SACHSE, Michael**
  **09120 Chemnitz (DE)**

(74) Mandataire: **Renault Group**
  **Renault s.a.s.**
  **API : TCR GRA 2 36**
  **1, Avenue du Golf**
  **78084 Guyancourt Cedex (FR)**

(56) Documents cités:
**WO-A2-2018/115963     US-A1- 2019 092 168**

EP 4 025 471 B1

**Description**

L'invention concerne le domaine de l'assistance à la conduite d'un véhicule automobile. Plus particulièrement, l'invention concerne un procédé de commande d'un système de régulation d'une distance inter-véhicules.

Les fonctions d'assistance à la conduite disponibles sur les véhicules actuels visent à améliorer le confort de conduite et à réduire l'insécurité routière. A ce titre, on a cherché à développer des fonctions qui permettent de maintenir une distance de consigne prédéterminée ou distance de sécurité entre deux véhicules. Ainsi, le système ACC (« Adaptative Cruise Control » en anglais ou « contrôle adaptatif de la vitesse de croisière ») est disponible sur certains véhicules. Ce système équipant un véhicule, dit véhicule suiveur, permet de détecter le véhicule qui le précède, dit véhicule cible, le véhicule suiveur étant équipé d'un laser ou d'une caméra, d'estimer la vitesse et la distance du véhicule cible, puis de contrôler la vitesse du véhicule suiveur pour maintenir une distance de sécurité. Dans de nombreux pays, la règlementation routière stipule que le véhicule suiveur doit garder une distance de sécurité, en particulier dans le but d'éviter une collision lorsque le véhicule qui précède freine ou s'arrête. La distance de sécurité dépend principalement de la vitesse du véhicule suiveur. Par exemple selon la réglementation routière française, cette distance de sécurité correspond à une distance couverte par le véhicule suiveur dans un intervalle de temps déterminé, qui est d'au moins deux secondes. Autrement dit, la règlementation impose de laisser une distance équivalente à deux secondes de trajet entre le véhicule suiveur et le véhicule cible, car cet intervalle de temps permet en théorie aux usagers d'être en sécurité en cas de freinage brusque.

On connaît par exemple du document de brevet US6,789,637, un dispositif de contrôle de distance pour un véhicule automobile, le dispositif étant adapté pour observer une distance de consigne ou un intervalle de temps de consigne par rapport à un véhicule cible, en fonction de la vitesse de déplacement, le contrôle de distance prenant en compte une distance minimale ou un intervalle de temps minimal, spécifiable par le conducteur, lors de la détermination de la distance de consigne ou de l'intervalle de temps de consigne. En réponse à de mauvaises conditions de visibilité détectées par des capteurs équipant le véhicule, le dispositif de contrôle de distance est prévu pour augmenter l'intervalle de temps de consigne déterminé pour une visibilité normale. Le dispositif de contrôle met donc en oeuvre un intervalle de temps adaptatif en fonction des conditions de visibilité pour calculer la distance de consigne.

De US 2019/092168 A1, on connaît un procédé de commande d'un système de régulation d'une distance inter-véhicules permettant de choisir une distance inter-véhicules en fonction d'une sélection par le conducteur, et de calculer, en vue de plusieurs scénarios, une accélération du véhicule.

WO 2018/115963 A2 divulgue de calculer, dans un procédé de régulation d'une distance inter-véhicules, une distance sur la base des décélérations que subissent les véhicules lors d'un freinage d'urgence, tel qu'une distance minimale à l'arrêt est respectée.

Cependant, il existe des situations où le contrôle de la distance de sécurité derrière le véhicule cible selon les principes exposés ci-dessus en référence au document de l'art antérieur, n'est pas suffisant pour permettre d'éviter des collisions, notamment dans le cas où les capacités de freinage du véhicule suiveur sont obérées, par exemple en raison d'un glissement important des roues du véhicule.

Aussi, dans ces situations spécifiques et en cas de vitesse plus élevée, la régulation de la distance basée sur la prise en compte de l'intervalle de temps pour la mise en oeuvre des fonctions ACC, n'offre pas de garanties suffisantes en ce qui concerne la capacité à éviter d'éventuelles collisions, alors que le but ultime de ces fonctions d'assistance est de réduire au maximum l'insécurité routière.

Aussi, un but de l'invention est de proposer un procédé de commande de régulation de la distance de sécurité avec un véhicule cible, palliant au moins en partie les inconvénients de l'art antérieur. En particulier, un but est de réduire les scenarii où une collision avec le véhicule précédent ne peut pas être évitable.

Dans ce but, l'invention concerne un procédé de commande d'un système de régulation d'une distance entre un véhicule cible et un véhicule suiveur, le système de régulation étant embarqué sur le véhicule suiveur, le procédé comprenant :

la mise en oeuvre d'une loi de commande de régulation de la distance qui calcule pour une pluralité de combinaisons possibles de vitesses de déplacement du véhicule suiveur et du véhicule cible, au moins les distances de consigne potentielles suivantes :

-   une première distance dTimegap calculée sur la base d'un intervalle de temps prédéterminé tTimegapDist, correspondant à la distance couverte par ledit véhicule suiveur dans ledit intervalle de temps en fonction de sa vitesse de déplacement vEgo,

-   une deuxième distance dSafetyDistStop calculée en fonction des vitesses de déplacement respectives des véhicules suiveur et cible vEgo et vTarget et de valeurs de décélération prédéterminées desdits véhicule aEgoSafetyDist et aTargetSafetyDist, lesdites valeurs de décélération prédéterminées correspondant à la décélération que subissent lesdits véhicules lors d'un freinage d'urgence,

- une troisième distance dSafetyDistColl établie sur la base d'une vitesse de collision prédéterminée avec un véhicule précédent à l'arrêt, définie par rapport à une vitesse maximale spécifiée pour une telle collision vAccidentVelocity, ladite troisième distance étant calculée en fonction de la vitesse de déplacement du véhicule suiveur vEgo, de la vitesse maximale spécifié vAccidentVelocity et de la valeur de décélération prédéterminée du véhicule suiveur aEgoSafetyDist,

- une quatrième distance correspondant à une distance minimale à l'arrêt du véhicule suiveur par rapport au véhicule cible,

et, pour une combinaison donnée de vitesses de déplacement des véhicules suiveur et cible parmi la pluralité de combinaisons possibles, la détermination d'une distance de consigne finale parmi lesdites distances de consigne potentielles calculées précédemment par ladite loi de commande.

Selon un mode de réalisation préféré, la détermination de la distance de consigne finale comprend l'évaluation de la distance correspondant au maximum des première, deuxième, troisième et quatrième distances potentielles pour la combinaison donnée de vitesses de déplacement des véhicules suiveur et cible.

Selon une caractéristique, on calcule ladite deuxième distance potentielle à l'aide des valeurs de vitesses de déplacement respectives des véhicules suiveur et cible vEgo et vTarget et des valeurs de décélération prédéterminées desdits véhicule aEgoSafetyDist et aTargetSafetyDist, en utilisant l'expression suivante :

$$\mathrm{dSafetyDistStop} = \max\,(\mathrm{vEgo} \cdot \mathrm{tSystemTolerance} - \frac{0.5 \cdot \mathrm{vEgo}^2}{\mathrm{aEgoSafetyDist}} + \frac{0.5 \cdot \mathrm{vTarget}^2}{\mathrm{aTargetSafetyDist}}, 0)$$

le paramètre tSystemTolerance correspondant à un temps de retard du système.

Selon une autre caractéristique, on calcule ladite troisième distance potentielle à l'aide des valeurs de vitesse de déplacement du véhicule suiveur vEgo, de vitesse maximale spécifié pour une collision vAccidentVelocity et de décélération prédéterminée du véhicule suiveur aEgoSafetyDist, en utilisant l'expression suivante :

$$dSafetyDistColl = \max\,(vEgo \cdot tSystemTolerance + 0.5 \cdot \frac{vAccidentVelocity^2 - vEgo^2}{aEgoSafetyDist}, 0)$$

le paramètre tSystemTolerance correspondant à un temps de retard du système.

De préférence, le temps de retard du système est défini par le temps nécessaire pour atteindre la force de freinage demandée et/ou par le temps de perception-réaction du système.

D'autres caractéristiques et avantages de la présente invention apparaîtront plus clairement à la lecture de la description suivante donnée à titre d'exemple illustratif et non limitatif et faite en référence à la figure unique suivante :

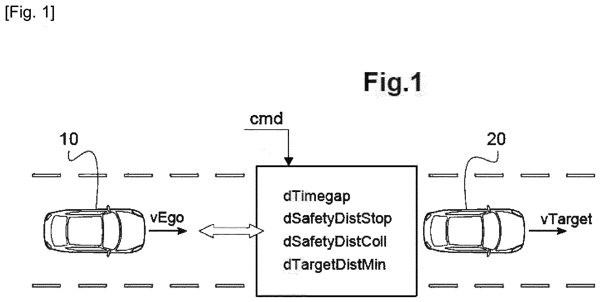

[Fig. 1] illustre schématiquement le système de régulation de distance selon l'invention.

En référence à la figure 1, le système de régulation de distance selon l'invention vise à mettre en oeuvre une régulation de telle façon à ce qu'un véhicule suiveur 10 équipé du système puisse suivre à une distance donnée, dite distance de sécurité, un véhicule se situant devant, dit véhicule cible 20. Typiquement, le véhicule suiveur 10 est équipé de moyens de mesure, par exemple de type radar, qui permettent de mesurer la distance et la vitesse relative entre le véhicule suiveur et un véhicule cible, ainsi que d'un capteur de vitesse embarqué apte à délivrer une information sur la vitesse du véhicule.

Une loi de commande du système est alors conçue pour délivrer des consignes d'accélération et de décélération à appliquer au véhicule à partir de la distance relative mesurée, de la vitesse du véhicule suiveur et de sa vitesse relative par rapport au véhicule cible, en fonction d'une distance de sécurité de consigne, pour contrôler la position longitudinale du véhicule suiveur par rapport au véhicule cible, de façon à maintenir sensiblement constante la distance entre les véhicules suiveur et cible autour de la valeur de consigne.

Cette régulation est réalisée en agissant sur le couple moteur et les freins, selon qu'une force motrice ou une force de freinage doit être appliquée au système pour respecter la distance de consigne.

La loi de commande cmd du système de régulation repose selon l'invention sur la détermination d'une distance de consigne, choisie parmi différentes définitions de la notion de distance de sécurité, qui seront explicitées ci-après, en fonction d'une combinaison donnée entre la vitesse de déplacement du véhicule suiveur vEgo, d'une part et la vitesse de déplacement du véhicule cible vtarget, d'autre part.

Une première définition de la distance de sécurité utilisée par la loi de commande est fondée sur la notion de distance parcourue par le véhicule suiveur pendant un intervalle de temps donné, noté tTimegapDist.

Cette distance de sécurité basée sur le respect d'un intervalle de temps donné avec le véhicule qui précède résulte plus précisément d'exigences réglementaires. Ainsi, la règlementation routière notamment en France et en Allemagne stipule que le véhicule suiveur doit garder une distance de sécurité dans le but d'éviter une collision lorsque le véhicule précédent freine ou s'arrête. La distance de sécurité correspond ainsi à la distance couverte par le véhicule suiveur dans un intervalle de temps donné tTimegapDist, qui est fixé par exemple à 2 secondes en France et 1,8 secondes en Allemagne. La règlementation exige donc le maintien d'une distance minimale basée sur cet intervalle de temps donné. Autrement dit, cette distance de sécurité, notée dTimegap, est calculée sur la base de l'intervalle de temps donné tTimegapDist multiplié par la vitesse du véhicule suiveur par rapport au véhicule précédent :

$$dTimegap = vEgo.tTimegapDist$$

Le paramètre tTimegapDist permet donc le réglage de cette distance de sécurité.

Le tableau suivant fournit la distance de sécurité basée sur un intervalle de temps fixé à 2 secondes pour différentes vitesses du véhicule suiveur et du véhicule cible en km/h.

[Tableau 1]

| dTimegap (m) | vTarget | | | | | | | | | | | | | |
|---|---|---|---|---|---|---|---|---|---|---|---|---|---|---|
| **vEgo** | 0,0 | 10,0 | 20,0 | 30,0 | 40,0 | 50,0 | 60,0 | 70,0 | 80,0 | 90,0 | 100,0 | 110,0 | 120,0 | 130,0 |
| 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,0 | 5,56 | 5,56 | 5,56 | 5,56 | 5,56 | 5,56 | 5,56 | 5,56 | 5,56 | 5,56 | 5,56 | 5,56 | 5,56 | 5,56 |
| 20,0 | 11,11 | 11,11 | 11,11 | 11,11 | 11,11 | 11,11 | 11,11 | 11,11 | 11,11 | 11,11 | 11,11 | 11,11 | 11,11 | 11,11 |
| 30,0 | 16,67 | 16,67 | 16,67 | 16,67 | 16,67 | 16,67 | 16,67 | 16,67 | 16,67 | 16,67 | 16,67 | 16,67 | 16,67 | 16,67 |
| 40,0 | 22,22 | 22,22 | 22,22 | 22,22 | 22,22 | 22,22 | 22,22 | 22,22 | 22,22 | 22,22 | 22,22 | 22,22 | 22,22 | 22,22 |
| 50,0 | 27,78 | 27,78 | 27,78 | 27,78 | 27,78 | 27,78 | 27,78 | 27,78 | 27,78 | 27,78 | 27,78 | 27,78 | 27,78 | 27,78 |
| 60,0 | 33,33 | 33,33 | 33,33 | 33,33 | 33,33 | 33,33 | 33,33 | 33,33 | 33,33 | 33,33 | 33,33 | 33,33 | 33,33 | 33,33 |
| 70,0 | 38,89 | 38,89 | 38,89 | 38,89 | 38,89 | 38,89 | 38,89 | 38,89 | 38,89 | 38,89 | 38,89 | 38,89 | 38,89 | 38,89 |
| 80,0 | 44,44 | 44,44 | 44,44 | 44,44 | 44,44 | 44,44 | 44,44 | 44,44 | 44,44 | 44,44 | 44,44 | 44,44 | 44,44 | 44,44 |
| 90,0 | 50,00 | 50,00 | 50,00 | 50,00 | 50,00 | 50,00 | 50,00 | 50,00 | 50,00 | 50,00 | 50,00 | 50,00 | 50,00 | 50,00 |
| 100,0 | 55,56 | 55,56 | 55,56 | 55,56 | 55,56 | 55,56 | 55,56 | 55,56 | 55,56 | 55,56 | 55,56 | 55,56 | 55,56 | 55,56 |
| 110,0 | 61,11 | 61,11 | 61,11 | 61,11 | 61,11 | 61,11 | 61,11 | 61,11 | 61,11 | 61,11 | 61,11 | 61,11 | 61,11 | 61,11 |
| 120,0 | 66,67 | 66,67 | 66,67 | 66,67 | 66,67 | 66,67 | 66,67 | 66,67 | 66,67 | 66,67 | 66,67 | 66,67 | 66,67 | 66,67 |
| 130,0 | 72,22 | 72,22 | 72,22 | 72,22 | 72,22 | 72,22 | 72,22 | 72,22 | 72,22 | 72,22 | 72,22 | 72,22 | 72,22 | 72,22 |

Une deuxième définition de la distance de sécurité utilisée par la loi de commande cmd de l'invention est fondée sur la notion de distance d'arrêt du véhicule. Il s'agit de la distance qui est nécessaire au véhicule pour s'arrêter. Cette distance par rapport au véhicule précédent doit être choisie de manière à ce que le véhicule suiveur puisse s'arrêter derrière le véhicule précédent, même en cas de freinage brusque du véhicule précédent. Elle est liée à la performance présumée du véhicule suiveur et du véhicule cible en termes de capacité de freinage, mais aussi à la prise en compte d'un temps de retard du système.

Ainsi, pour déterminer cette distance d'arrêt, il faut prendre en compte une capacité de freinage présumée du véhicule suiveur, notée aEgoSafetyDist et une capacité de freinage présumée du véhicule cible, notée aTargetSafetyDist. En outre, il faut tenir compte du temps de retard du système, noté tSystemTolerance, qui est par exemple fonction du temps nécessaire pour atteindre la force de freinage demandée et/ou du temps de perception-réaction du système par rapport à la situation de freinage d'urgence.

Comme indiqué plus haut, cette définition de la distance de sécurité basée sur la distance d'arrêt vise à permettre de gérer les cas de freinage brusque des véhicules précédents en évitant les collisions. Autrement dit, si la distance maintenue par le véhicule suiveur par rapport au véhicule cible correspond à cette distance d'arrêt, il devrait être possible au véhicule suiveur de s'arrêter derrière le véhicule cible en phase de freinage brusque avec le niveau de décélération garanti.

Cette distance de sécurité, notée dSafetyDistStop, est calculée de la façon suivante en fonction des vitesses de déplacement respectives des véhicules suiveur et cible vEgo et vTarget et des valeurs de décélération prédéterminées desdits véhicules aEgoSafetyDist et aTargetSafetyDist, lesdites valeurs de décélération prédéterminées correspondant donc à la décélération que subissent lesdits véhicules lors d'un freinage d'urgence :

$$\text{dSafetyDistStop} = \max\left(\text{vEgo} \cdot \text{tSystemTolerance} - \frac{0.5 \cdot \text{vEgo}^2}{\text{aEgoSafetyDist}} + \frac{0.5 \cdot \text{vTarget}^2}{\text{aTargetSafetyDist}}, 0\right)$$

Afin de prévoir une certaine marge de sécurité pour la détermination de cette distance d'arrêt, on supposera que le véhicule suiveur possède une capacité de freinage inférieure à celle du véhicule cible, par exemple de l'ordre de 2m/s². Autrement dit :

$$aEgoSafetyDist - aTargetSafetyDist \equiv 2\ m/s^2.$$

Le tableau suivant fournit des valeurs de la distance de sécurité basée sur la distance d'arrêt dSafetyDistStop, calculées pour différentes combinaisons de vitesses du véhicule suiveur et du véhicule cible en km/h, avec comme paramètrse d'entrée : aEgoSafetyDist = -3,7m/s² et aTargetSafetyDist = -5,7m/s²,

Par ailleurs, le temps de retard du système tSystemTolerance est fixé à 0.4 seconde.

[Tableau 2]

| dSafetyDistStop (m) | | | | | | | | | | | | | | | |
|---|---|---|---|---|---|---|---|---|---|---|---|---|---|---|---|
| vEgo | vtarget | 0,0 | 10,0 | 20,0 | 30,0 | 40,0 | 50,0 | 60,0 | 70,0 | 80,0 | 90,0 | 100,0 | 110,0 | 120,0 | 130,0 |
| 0,0 | | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,0 | | 2,2 | 1,5 | 0,0 | 0,0 | 0/0 | 0,0 | 0,0 | 0,0 | 0,0 | 0,0 | 0,0 | 0,0 | 0,0 | 0,0 |
| 20,0 | | 6,4 | 5,7 | 3,7 | 0,3 | 0,0 | 0,0 | 0,0 | 0,0 | 0,0 | 0,0 | 0,0 | 0,0 | 0,0 | 0,0 |
| 30,0 | | 12,7 | 12,0 | 10,0 | 6,6 | 1,9 | 0,0 | 0,0 | 0,0 | 0,0 | 0,0 | 0,0 | 0,0 | 0,0 | 0,0 |
| 40,0 | | 21,1 | 20,5 | 18,4 | 15,0 | 10,3 | 4,2 | 0,0 | 0,0 | 0,0 | 0,0 | 0,0 | 0,0 | 0,0 | 0,0 |
| 50,0 | | 31,6 | 30,9 | 28,9 | 25,5 | 20,8 | 14,7 | 7,3 | 0,0 | 0,0 | 0,0 | 0,0 | 0,0 | 0,0 | 0,0 |
| 60,0 | | 44,2 | 43,5 | 41,5 | 38,1 | 33,4 | 27,3 | 19,8 | 11,0 | 0,9 | | 0,0 | | | 0,0 |
| 70,0 | | 58,9 | 58,2 | 56,2 | 52,8 | 48,0 | 41,9 | 34,5 | 25,7 | 15,6 | 4,0 | 0,0 | 0,0 | 0,0 | 0,0 |
| 80,0 | | 75,6 | 74,9 | 72,9 | 69,5 | 64,8 | 58,7 | 51,3 | 42,5 | 32,3 | 20,8 | 7,9 | 0,0 | 0,0 | 0,0 |
| 90,0 | | 94,5 | 93,8 | 91,8 | 88,4 | 83,6 | 77,5 | 70,1 | 61,3 | 51,1 | 39,6 | 26,8 | 12,6 | 0,0 | 0,0 |
| 100,0 | | 115,4 | 114, 7 | 112,7 | 109,3 | 104,6 | 98,5 | 91,0 | 82,2 | 72,1 | 60,6 | 47,7 | 33,5 | 17,9 | 1,0 |
| 110,0 | | 138,4 | 137, 7 | 135,7 | 132,3 | 127,6 | 121,5 | 114,0 | 105,2 | 95,1 | 83,6 | | 56,5 | 40,9 | 24,0 |
| 120,0 | | 163,5 | 162, 8 | 160,8 | 157,4 | 152,7 | 146,6 | 139,1 | 130,3 | 120, 2 | 108,7 | 95,8 | 81,6 | 66,0 | 49,1 |
| 130,0 | | 190,7 | 190, 0 | 188,0 | 184,6 | 179,8 | 173,7 | 166,3 | 157,5 | 147, 3 | 135,8 | 123,0 | 108,8 | 93,2 | 76,3 |

Ainsi, à titre d'exemple, dans le cas où la vitesse du véhicule suiveur et la vitesse du véhicule cible sont toutes deux égales à 50 km/h, en maintenant une distance de sécurité autour de 14,7 m par rapport au véhicule cible, le niveau de décélération de -3,7 m/$^2$ est suffisant pour arrêter le véhicule suiveur derrière le véhicule cible, en supposant que ce dernier freine avec un niveau de décélération de -5,7 m/s$^2$.

Si l'on considère que la vitesse cible est égale à zéro, la première colonne du tableau ci-dessus permet également de prendre en compte les situations avec un objet à l'arrêt situés devant le véhicule, véhicule ou piéton, en fournissant la distance nécessaire pour s'arrêter derrière cet objet à l'arrêt avec un niveau de décélération égale à -3,7 m/s$^2$, pour différentes vitesses du véhicule suiveur.

Une troisième définition de la distance de sécurité utilisée par la loi de commande cmd de l'invention est basée sur le fait d'assurer une certaine vitesse de collision inférieure à une vitesse spécifiée, tandis que le véhicule qui précède est à l'arrêt.

La vitesse de collision est la vitesse à l'impact du véhicule au moment où il heurte l'obstacle. Cette distance de sécurité basée sur le respect d'une certaine vitesse de collision pourra permettre de gérer principalement deux cas d'utilisation différents. Un premier cas d'utilisation concerne une situation où le véhicule cible qui précède détecte un obstacle devant lui et l'évite sans réduire sa vitesse. Ainsi, dans une telle situation, le véhicule suiveur ne pourra détecter l'obstacle qu'après la manoeuvre d'évitement dudit obstacle par le véhicule précédent ou, au mieux, pendant cette manoeuvre d'évitement. Un deuxième cas d'utilisation concerne une situation où le véhicule cible qui précède le véhicule suiveur vient s'empiler sur un carambolage, de sorte qu'il se retrouve immobilisé beaucoup plus rapidement que dans un cas de freinage d'urgence. La distance de sécurité imposée au véhicule suiveur doit néanmoins lui permettre de gérer ces situations.

La définition de cette distance de sécurité basée sur une vitesse de collision prédéfinie inclut la prise en compte des deux paramètres déjà définis en lien avec la deuxième définition exposée plus haut de la distance de sécurité basée sur la distance d'arrêt, que sont le temps de retard du système du véhicule suiveur tSystemTolerance et sa capacité de freinage maximale présumée EgoSafetyDist. La distance de sécurité est définie de manière à ce que la vitesse de collision du véhicule suiveur avec le véhicule (ou l'objet) qui précède soit inférieure à une vitesse maximale spécifiée pour une collision, notée vAccidentVelocity.

Cette distance de sécurité, notée dSafetyDistColl, est calculée de la façon suivante, en fonction de la vitesse du véhicule suiveur vEgo, de la vitesse de collision spécifiée vAccidentVelocity et de la valeur de décélération prédéterminée du véhicule suiveur aEgoSafetyDist tout en tenant compte du temps de retard du système :

$$dSafetyDistColl$$
$$= max\left(vEgo \cdot tSystemTolerance + 0.5 \cdot \frac{vAccidentVelocity^2 - vEgo^2}{aEgoSafetyDist}, 0\right)$$

Le tableau suivant fournit des valeurs de la distance de sécurité basée sur la vitesse de collision prédéfinie dSafetyDistColl, calculées pour différentes combinaisons de vitesses du véhicule suiveur et du véhicule cible en km/h, avec comme paramètres d'entrée : aEgoSafetyDist = -3,7m/s$^2$ ; VAccidentVelocity = 50 km/h et tSystemTolerance=0.4s.

[Tableau 3]

**dSafetyDistColl (m)**

| vEgo \ vTarget | 0,0 | 10,0 | 20,0 | 30,0 | 40,0 | 50,0 | 60,0 | 70,0 | 80,0 | 90,0 | 100,0 | 110,0 | 120,0 | 130,0 |
|---|---|---|---|---|---|---|---|---|---|---|---|---|---|---|
| 0,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 10,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 20,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 30,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 40,0 | 0,0 | 0,0 | 0,0 | 0,0 | 0,0 | 0,0 | 0,0 | 0,0 | 0,0 | 0,0 | 0,0 | 0,0 | 0,0 | 0,0 |
| 50,0 | 5,6 | 5,6 | 5,6 | 5,6 | 5,6 | 5,6 | 5,6 | 5,6 | 5,6 | 5,6 | 5,6 | 5,6 | 5,6 | 5,6 |
| 60,0 | 18,1 | 18,1 | 18,1 | 18,1 | 18,1 | 18,1 | 18,1 | 18,1 | 18,1 | 18,1 | 18,1 | 18,1 | 18,1 | 18,1 |
| 70,0 | 32,8 | 32,8 | 32,8 | 32,8 | 32,8 | 32,8 | 32,8 | 32,8 | 32,8 | 32,8 | 32,8 | 32,8 | 32,8 | 32,8 |
| 80,0 | 49,6 | 49,6 | 49,6 | 49,6 | 49,6 | 49,6 | 49,6 | 49,6 | 49,6 | 49,6 | 49,6 | 49,6 | 49,6 | 49,6 |
| 90,0 | 68,4 | 68,4 | 68,4 | 68,4 | 68,4 | 68,4 | 68,4 | 68,4 | 68,4 | 68,4 | 68,4 | 68,4 | 68,4 | 68,4 |
| 100,0 | 89,3 | 89,3 | 89,3 | 89,3 | 89,3 | 89,3 | 89,3 | 89,3 | 89,3 | 89,3 | 89,3 | 89,3 | 89,3 | 89,3 |
| 110,0 | 112,3 | 112,3 | 112,3 | 112,3 | 112,3 | 112,3 | 112,3 | 112,3 | 112,3 | 112,3 | 112,3 | 112,3 | 112,3 | 112,3 |
| 120,0 | 137,4 | 137,4 | 137,4 | 137,4 | 137,4 | 137,4 | 137,4 | 137,4 | 137,4 | 137,4 | 137,4 | 137,4 | 137,4 | 137,4 |
| 130,0 | 164,6 | 164,6 | 164,6 | 164,6 | 164,6 | 164,6 | 164,6 | 164,6 | 164,6 | 164,6 | 164,6 | 164,6 | 164,6 | 164,6 |

Une quatrième définition de la distance de sécurité utilisée par la loi de commande cmd de l'invention est fondée sur la notion de distance minimale requise à l'arrêt du véhicule suiveur par rapport à un véhicule cible. Cette distance minimale requise à l'arrêt, notée dTargetDistMin, est plus précisément choisie pour procurer au conducteur du véhicule un sentiment de sécurité et lui assurer un espace suffisant pour contourner des objets à l'arrêt, situés devant le véhicule, lorsqu'il s'approche de ceux-ci, en particulier dans les situations où le mode de conduite autonome du véhicule n'est plus disponible.

Du point de vue de la sécurité, la distance minimale à l'arrêt du véhicule suiveur doit être choisie supérieure à zéro. A titre d'exemple, on fixera dTargetDistMin = 3 m, dans le cas d'un véhicule situé devant le véhicule suiveur et dTargetDistMin = 5 m, dans le cas où le véhicule suiveur est précédé par un objet non identifié ou dans le cas où le véhicule suiveur arrive sur un lieu d'accident.

Du point de vue de la sécurité, ces valeurs sont suffisantes. De plus, le comportement humain en situation d'embouteillage est généralement complètement différent. Ainsi, la distance d'arrêt du véhicule par rapport au véhicule précèdent lors d"un embouteillage est beaucoup plus faible que les valeurs fixées ci-dessus.

La distance de consigne imposée au système de régulation par la loi de commande résulte alors d'un choix effectué parmi l'ensemble de ces différentes définitions de distances de sécurité telles qu'exposées ci-dessus, ce choix étant effectué en fonction de la vitesse du véhicule suiveur et de la vitesse du véhicule cible.

Plus précisément, pour chaque combinaison possible de vitesses du véhicule suiveur et du véhicule cible, la loi de commande est conçue pour déterminer une distance de consigne, notée d_cons, correspondant au maximum des distances de sécurité requises selon les première, deuxième, troisième et quatrième définitions telles qu'exposées ci-dessus.

Ainsi, cette distance de consigne d_cons imposée au système de régulation du véhicule suiveur est calculée de la façon suivante, pour chaque combinaison de vitesses du véhicule suiveur et du véhicule cible :

$$d\_cons = \max\,(dTimegap, dSafetyDistStop, dSafetyDistColl, dTargetDistMin)$$

Le tableau suivant fournit les valeurs ainsi calculées de cette distance de consigne pour les différentes combinaisons de vitesses du véhicule suiveur et du véhicule cible en km/h, sur la base des exemples fournis précédemment pour chacune des différentes définitions de la distance de sécurité utilisées. Ce tableau contient donc les distances de consigne que le véhicule suiveur doit respecter par rapport au véhicule cible.

[Tableau 4]

| d_cons = max(dTimegap, dSafetyDistStop, dSafetyDistColl, dTargetDistMin) | | | | | | | | | | | | | | | |
|---|---|---|---|---|---|---|---|---|---|---|---|---|---|---|---|
| | **vTarget** | 0,0 | 10,0 | 20,0 | 30,0 | 40,0 | 50,0 | 60,0 | 70,0 | 80,0 | 90,0 | 100,0 | 110,0 | 120,0 | 130,0 |
| **vEgo** | | | | | | | | | | | | | | | |
| 0,0 | | 3 | 3 | 3 | 3 | 3 | 3 | 3 | 3 | 3 | 3 | 3 | 3 | 3 | 3 |
| 10,0 | | 5,6 | 5,6 | 5,6 | 5,6 | 5,6 | 5,6 | 5,6 | 5,6 | 5,6 | 5,6 | 5,6 | 5,6 | 5,6 | 5,6 |
| 20,0 | | 11,1 | 11,1 | 11,1 | 11,1 | 11,1 | 11,1 | 11,1 | 11,1 | 11,1 | 11,1 | 11,1 | 11,1 | 11,1 | 11,1 |
| 30,0 | | 16,7 | 16,7 | 16,7 | 16,7 | 16,7 | 16,7 | 16,7 | 16,7 | 16,7 | 16,7 | 16,7 | 16,7 | 16,7 | 16,7 |
| 40,0 | | 22,2 | 22,2 | 22,2 | 22,2 | 22,2 | 22,2 | 22,2 | 22,2 | 22,2 | 22,2 | 22,2 | 22,2 | 22,2 | 22,2 |
| 50,0 | | 31,6 | 30,9 | 28,9 | 27,8 | 27,8 | 27,8 | 27,8 | 27,8 | 27,8 | 27,8 | 27,8 | 27,8 | 27,8 | 27,8 |
| 60,0 | | 44,2 | 43,5 | 41,5 | 38,1 | 33,4 | 33,3 | 33,3 | 33,3 | 33,3 | 33,3 | 33,3 | 33,3 | 33,3 | 33,3 |
| 70,0 | | 58,9 | 58,2 | 56,2 | 52,8 | 48 | 41,9 | 38,9 | 38,9 | 38,9 | 38,9 | 38,9 | 38,9 | 38,9 | 38,9 |
| 80,0 | | 75,6 | 74,9 | 72,9 | 69,5 | 64,8 | 58,7 | 51,3 | 49,6 | 49,6 | 49,6 | 49,6 | 49,6 | 49,6 | 49,6 |
| 90,0 | | 94,5 | 93,8 | 91,8 | 88,4 | 83,6 | 77,5 | 70,1 | 68,4 | 68,4 | 68,4 | 68,4 | 68,4 | 68,4 | 68,4 |
| 100,0 | | 115,4 | 114,7 | 112,7 | 109,3 | 104,6 | 98,5 | 91 | 89,3 | 89,3 | 89,3 | 89,3 | 89,3 | 89,3 | 89,3 |
| 110,0 | | 138,4 | 137,7 | 135,7 | 132,3 | 127,6 | 121,5 | 114 | 112,3 | 112,3 | 112,3 | 112,3 | 112,3 | 112,3 | 112,3 |
| 120,0 | | 163,5 | 162,8 | 160,8 | 157,4 | 152,7 | 146,6 | 139,1 | 137,4 | 137,4 | 137,4 | 137,4 | 137,4 | 137,4 | 137,4 |
| 130,0 | | 190,7 | 190 | 188 | 184,6 | 179,8 | 173,7 | 166,3 | 164,6 | 164,6 | 164,6 | 164,6 | 164,6 | 164,6 | 164,6 |

En supposant la mise en oeuvre d'une détection précise de la distance avec le véhicule ou l'objet cible précédent par les moyens de mesure embarqués sur le véhicule suiveur, on peut établir que si la distance régulée est supérieure à la distance de consigne déterminée, il n'y a aucun risque de collision.

Il apparaît que les plus grandes distances de consigne requises sont liées à l'approche par le véhicule suiveur d'un objet cible à l'arrêt. Cette situation est reflétée par la première colonne du tableau ci-dessus définissant la distance de consigne pour une vitesse nulle de la cible. Dans cette première colonne, la distance de sécurité basée sur la distance d'arrêt est calculée pour une capacité de freinage présumée du véhicule suiveur aEgoSafetyDist= -3,7 m/s$^2$, qui est relativement faible, de façon à éviter un risque pour la sécurité vis-à-vis de la circulation des véhicules à l'arrière du véhicule suiveur. La distance de consigne requise basée sur le calcul de la distance d'arrêt diminue à mesure que la capacité de freinage du véhicule suiveur augmente. 1

**Revendications**

1. Procédé de commande d'un système de régulation d'une distance entre un véhicule cible (10) et un véhicule suiveur (20), le système de régulation étant embarqué sur le véhicule suiveur, le procédé comprenant :

   la mise en oeuvre d'une loi de commande (cmd) de régulation de la distance qui calcule pour une pluralité de combinaisons possibles de vitesses de déplacement du véhicule suiveur et du véhicule cible, au moins les distances de consigne potentielles suivantes :

   - une première distance dTimegap calculée sur la base d'un intervalle de temps prédéterminé tTimegapDist, correspondant à la distance couverte par ledit véhicule suiveur dans ledit intervalle de temps en fonction de sa vitesse de déplacement vEgo,
   - une deuxième distance dSafetyDistStop calculée en fonction des vitesses de déplacement respectives des véhicules suiveur et cible vEgo et vTarget et de valeurs de décélération prédéterminées desdits véhicules aEgoSafetyDist et aTargetSafetyDist, lesdites valeurs de décélération prédéterminées correspondant à la décélération que subissent lesdits véhicules lors d'un freinage d'urgence,
   - une troisième distance dSafetyDistColl établie sur la base d'une vitesse de collision prédéterminée avec un véhicule précédent à l'arrêt, définie par rapport à une vitesse maximale spécifiée pour une telle collision vAccidentVelocity, ladite troisième distance étant calculée en fonction de la vitesse de déplacement du véhicule suiveur vEgo, de la vitesse maximale spécifiée vAccidentVelocity et de la valeur de décélération prédéterminée du véhicule suiveur aEgoSafetyDist,
   - une quatrième distance correspondant à une distance minimale à l'arrêt du véhicule suiveur par rapport au véhicule cible,

   et, pour une combinaison donnée de vitesses de déplacement des véhicules suiveur et cible parmi la pluralité de combinaisons possibles, la détermination d'une distance de consigne finale parmi lesdites distances de consigne potentielles calculées précédemment par ladite loi de commande.

2. Procédé selon la revendication 1, **caractérisé en ce que** la détermination de la distance de consigne finale comprend l'évaluation de la distance correspondant au maximum des première, deuxième, troisième et quatrième distances potentielles pour la combinaison donnée de vitesses de déplacement des véhicules suiveur et cible.

3. Procédé selon la revendication 1 ou 2, **caractérisé en ce qu'**on calcule ladite deuxième distance potentielle dSafetyDistStop à l'aide des valeurs de vitesses de déplacement respectives des véhicules suiveur et cible vEgo et vTarget et des valeurs de décélération prédéterminées desdits véhicule aEgoSafetyDist et aTargetSafetyDist, en utilisant l'expression suivante :

$$dSafetyDistStop$$

$$= \max\left(vEgo \cdot tSystemTolerance - \frac{0.5 \cdot vEgo^2}{aEgoSafetyDist}\right.$$

$$\left. + \frac{0.5 \cdot vTarget^2}{aTargetSafetyDist}, 0\right)$$

le paramètre tSystemTolerance correspondant à un temps de retard du système.

4. Procédé selon l'une quelconque des revendications précédentes, **caractérisé en ce qu'**on calcule ladite troisième distance potentielle dSafetyDistColl à l'aide des valeurs de vitesse de déplacement du véhicule suiveur vEgo, de vitesse maximale spécifié pour une collision vAccidentVelocity et de décélération prédéterminée du véhicule suiveur aEgoSafetyDist, en utilisant l'expression suivante :

$$dSafetyDistColl$$
$$= \max\left(vEgo \cdot tSystemTolerance + 0.5\right.$$
$$\left. \cdot \frac{vAccidentVelocity^2 - vEgo^2}{aEgoSafetyDist}, 0\right)$$

le paramètre tSystemTolerance correspondant à un temps de retard du système.

5. Procédé selon la revendication 3 ou 4, **caractérisé en ce que** le temps de retard du système est défini par le temps nécessaire pour atteindre la force de freinage demandée et/ou par le temps de perception-réaction du système.

**Patentansprüche**

1. Verfahren zur Steuerung eines Systems zur Regelung eines Abstands zwischen einem Zielfahrzeug (10) und einem Folgefahrzeug (20), wobei das Regelungssystem in das Folgefahrzeug integriert ist, wobei das Verfahren umfasst: das Umsetzen eines Steuerungsgesetzes (cmd) zur Regelung des Abstands, das für eine Mehrzahl möglicher Kombinationen von Bewegungsgeschwindigkeiten des Folgefahrzeugs und des Zielfahrzeugs mindestens die folgenden potentiellen Sollabstände berechnet:

- einen ersten Abstand dTimegap, der auf der Grundlage eines vorherbestimmten Zeitintervalls tTimegapDist berechnet wird, entsprechend dem Abstand, den das Folgefahrzeug in dem Zeitintervall in Abhängigkeit von seiner Bewegungsgeschwindigkeit vEgo abdeckt,
- einen zweiten Abstand dSafetyDistStop, der in Abhängigkeit von den jeweiligen Bewegungsgeschwindigkeiten der Folge- und Zielfahrzeuge vEgo und vTarget und von vorherbestimmten Verzögerungswerten der Fahrzeuge aEgoSafetyDist und aTargetSafetyDist berechnet wird, wobei die vorherbestimmten Verzögerungswerte der Verzögerung entsprechen, die die Fahrzeuge bei einer Notbremsung erfahren,
- einen dritten Abstand dSafetyDistColl, der auf der Grundlage einer vorherbestimmten Kollisionsgeschwindigkeit mit einem vorausfahrenden Fahrzeug, das steht, berechnet wird, die in Bezug auf eine spezifizierte Höchstgeschwindigkeit für eine solche Kollision vAccidentVelocity berechnet wird, wobei der dritte Abstand in Abhängigkeit von der Bewegungsgeschwindigkeit des Folgefahrzeugs vEgo, von der spezifizierten Höchstgeschwindigkeit vAccidentVelocity und von dem vorherbestimmten Verzögerungswert des Folgefahrzeugs aEgoSafetyDist berechnet wird,
- einen vierten Abstand, der einem Mindestabstand im Stillstand des Folgefahrzeugs in Bezug auf das Zielfahrzeug entspricht,

und, für eine gegebene Kombination von Bewegungsgeschwindigkeiten der Folge- und Zielfahrzeuge unter der Mehrzahl möglicher Kombinationen, das Bestimmen eines finalen Sollabstands unter den potentiellen Sollabständen, die zuvor von dem Steuerungsgesetz berechnet wurden.

2. Verfahren nach Anspruch 1, **dadurch gekennzeichnet, dass** das Bestimmen des finalen Sollabstands das Bewerten des Abstands umfasst, der dem Maximum der potentiellen ersten, zweiten, dritten und vierten Abstände für die gegebene Kombination von Bewegungsgeschwindigkeiten der Folge- und Zielfahrzeuge entspricht.

3. Verfahren nach Anspruch 1 oder 2, **dadurch gekennzeichnet, dass** man den zweiten potentiellen Abstand dSafetyDistStop mithilfe der jeweiligen Bewegungsgeschwindigkeitswerte der Folge- und Zielfahrzeuge vEgo und vTarget und der vorherbestimmten Verzögerungswerte dieser Fahrzeuge aEgoSafetyDist und aTargetSafetyDist unter Verwendung des folgenden Ausdrucks berechnet:

$$dSafetyDistStop$$
$$= \max\left(vEgo \cdot tSystemTolerance - \frac{0.5 \cdot vEgo^2}{aEgoSafetyDist}\right.$$
$$\left. + \frac{0.5 \cdot vTarget^2}{aTargetSafetyDist}, 0\right)$$

wobei der Parameter tSystemTolerance einer Verzögerungszeit des Systems entspricht.

4. Verfahren nach einem der vorhergehenden Ansprüche, **dadurch gekennzeichnet, dass** man den dritten potentiellen Abstand dSafetyDistColl mithilfe der Werte für die Bewegungsgeschwindigkeit des Folgefahrzeugs vEgo, die spezifizierte Höchstgeschwindigkeit für eine Kollision vAccidentVelocity und die vorherbestimmte Verzögerung des Folgefahrzeugs aEgoSafetyDist unter Verwendung des folgenden Ausdrucks berechnet:

$$dSafetyDistColl$$
$$= \max\left(vEgo \cdot tSystemTolerance + 0.5\right.$$
$$\left. \cdot \frac{vAccidentVelocity^2 - vEgo^2}{aEgoSafetyDist}, 0\right)$$

wobei der Parameter tSystemTolerance einer Verzögerungszeit des Systems entspricht.

5. Verfahren nach Anspruch 3 oder 4, **dadurch gekennzeichnet, dass** die Verzögerungszeit des Systems durch die erforderliche Zeit zum Erreichen der angeforderten Bremskraft und/oder durch die Reaktionszeit des Systems definiert ist.

## Claims

1. Method for controlling a system for regulating a distance between a target vehicle (10) and a follower vehicle (20), the regulating system being on board the follower vehicle, the method comprising:

implementing a control law (cmd) for regulating the distance which computes, for a plurality of possible combinations of travel speeds of the follower vehicle and of the target vehicle, at least the following potential setpoint distances:

- a first distance dTimegap computed on the basis of a predetermined time interval tTimegapDist, corresponding to the distance covered by said follower vehicle in said time interval depending on its travel speed vEgo,
- a second distance dSafetyDistStop computed depending on the respective travel speeds vEgo and vTarget of the follower and target vehicles and on predetermined deceleration values aEgoSafetyDist and aTargetSafetyDist for said vehicles, said predetermined deceleration values corresponding to the deceleration which said vehicles undergo during emergency braking,
- a third distance dSafetyDistColl established on the basis of a predetermined speed of collision with a preceding stationary vehicle, defined with respect to a specified maximum speed vAccidentVelocity for such a collision, said third distance being computed depending on the travel speed vEgo of the follower vehicle, on the specified maximum speed vAccidentVelocity and on the predetermined deceleration value aEgoSafetyDist for the follower vehicle,
- a fourth distance corresponding to a minimum stationary distance of the follower vehicle with respect to the target vehicle,

and, for a given combination of travel speeds of the follower and target vehicles from among the plurality of possible combinations, determining a final setpoint distance from among said potential setpoint distances previously computed by means of said control law.

2. Method according to Claim 1, **characterized in that** determining the final setpoint distance comprises evaluating the distance corresponding to the maximum of the first, second, third and fourth potential distances for the given combination of travel speeds of the follower and target vehicles.

3. Method according to Claim 1 or 2, **characterized in that** said second potential distance dSafetyDistStop is computed using the respective travel speed values vEgo and vTarget for the follower and target vehicles and the predetermined deceleration values aEgoSafetyDist and aTargetSafetyDist for said vehicles, using the following expression:

$$dSafetyDistStop$$
$$= \max\left(vEgo \cdot tSystemTolerance - \frac{0.5 \cdot vEgo^2}{aEgoSafetyDist} + \frac{0.5 \cdot vTarget^2}{aTargetSafetyDist}, 0\right)$$

the parameter tSystemTolerance corresponding to a delay time of the system.

4. Method according to any one of the preceding claims, **characterized in that** said third potential distance dSafety-DistColl is computed using the travel speed value vEgo for the follower vehicle, the specified maximum speed value vAccidentVelocity for a collision and the predetermined deceleration value aEgoSafetyDist for the follower vehicle, using the following expression:

$$dSafetyDistColl$$
$$= \max\left(vEgo \cdot tSystemTolerance + 0.5 \cdot \frac{vAccidentVelocity^2 - vEgo^2}{aEgoSafetyDist}, 0\right)$$

the parameter tSystemTolerance corresponding to a delay time of the system.

5. Method according to Claim 3 or 4, **characterized in that** the delay time of the system is defined by the time needed to reach the required braking force and/or by the perception-reaction time of the system.

[Fig. 1]

Fig.1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6789637 B
- US 2019092168 A1

- WO 2018115963 A2